# FASCICULE DE BREVET EUROPEEN

(11) **EP 2 489 185 B1**
(45) Date de publication et mention de la délivrance du brevet: **20.11.2013**
(21) Numéro de dépôt: 10747240.9
(22) Date de dépôt: 31.08.2010
(51) Int. Cl.: H04N 7/24, H04N 7/52

(54) **PROCEDE POUR RAJOUTER UN CONTENU VOCAL A UN CONTENU VIDEO ET DISPOSITIF METTANT EN OEUVRE LE PROCEDE**
VERFAHREN ZUM HINZUFÜGEN VON SPRACHINHALTEN ZU VIDEOINHALTEN UND VORRICHTUNG ZUR UMSETZUNG DIESES VERFAHRENS
METHOD FOR ADDING VOICE CONTENT TO VIDEO CONTENT AND DEVICE FOR IMPLEMENTING SAID METHOD

(30) Priorité: 15.10.2009 FR 0904952
(43) Date de publication de la demande: 22.08.2012
(73) Titulaire: Thomson Licensing, 92130 Issy-les-Moulineaux (FR)
(72) Inventeur: CHEVALLIER, Louis, F-35520 La Meziere (FR); OISEL, Lionel, F-35137 La Nouaye (FR); SCHMOUKER, Philippe, F-35830 Betton (FR)
(74) Mandataire: Morain, David
(86) Numéro de dépôt international: PCT/EP2010/062766
(87) Numéro de publication internationale: WO 2011/045116

(56) Documents cités:
- WO-A1-2004/040576
- WO-A1-2006/021943
- US-A- 4 600 281
- DELP E J ET AL: "Advances in Digital Video Content Protection" PROCEEDINGS OF THE IEEE, IEEE. NEW YORK, US LNKD- DOI:10.1109/JPROC.2004.839623, vol. 93, no. 1, 1 janvier 2005 (2005-01-01), pages 171-183, XP011123862 ISSN: 0018-9219

## Description

La présente invention concerne un procédé pour rajouter un nouveau contenu sonore à un document vidéo soumis à des contraintes sécuritaires et un dispositif mettant en oeuvre le procédé.

De nos jours, il existe de nombreuses formes de piratages de documents audiovisuels. Des caméras installées dans les cinémas permettent de réaliser des copies illicites du document projeté. On trouve ensuite des copies illégales disponibles sur des réseaux, ou en vente sur des supports tels que les CD ou les DVD. Ces copies provoquent un préjudice pour l'industrie cinématographique et un manque à gagner pour les producteurs de documents audiovisuels. Des techniques sophistiquées sont élaborées pour empêcher ou détecter de tels actes. Par exemple, le producteur inscrit dans les images du document à projeter un marquage non détectable à l'oeil humain mais perceptible pour un appareil. Le marquage est rendu visible lors de la reproduction du document, ce qui dégrade considérablement le document et limite grandement sa valeur.

Pour éviter des copies illicites, il est important de sécuriser la transmission du document avant son lancement. Généralement, la sortie d'un document s'effectue par des bandes annonces qui le présente sous la forme d'une courte vidéo de 3 minutes généralement. Si des copies illégales circulent avant la sortie officielle et peuvent être reproduites par un grand nombre d'utilisateurs, cela peut limiter le nombre de spectateurs du document lors de sa sortie et diminuer considérablement son chiffre d'affaire. Il importe donc d'éviter les fuites de tout ou partie du document avant sa sortie. Généralement, les bandes vidéo et audio circulent en fourgon sécurisé.

Dans le passé, certaines fuites sont intervenues lors du doublage. Lorsque les contenus vidéo et audio sont finalisés, la bande vidéo au moins est envoyée à des doubleurs avec le script du texte à lire dans la langue de doublage. Ces copies sont celles du document qui va sortir prochainement, elles ont donc une grande valeur même si la bande son n'y est pas associée. De ce fait, il est important de sécuriser la transmission de la bande vidéo entre le producteur et la régie de doublage, ou de limiter la valeur de cette bande vidéo. Un moyen consiste à utiliser des transports sécurisés mais cela revient cher si le doublage s'effectue par des doubleurs dans le pays où l'on parle cette langue.

Le document WO 2004/040576 décrit un procédé pour ajouter un contenu vocal de doublage à un document vidéo. Ce procédé comporte les étapes de réception d'un document vidéo, d'acquisition d'un contenu vocal à un moment défini par un marqueur temporel correspondant au début d'une plage du document vidéo nécessitant un doublage et une étape d'assemblage du contenu vocal doublé au document vidéo.

La présente invention permet de limiter la valeur du document transmis à la régie de doublage

L'invention concerne un procédé pour rajouter un nouveau contenu vocal à un document audiovisuel, comportant une étape de réception d'un document vidéo composé d'images dans un dispositif de reproduction ; caractérisé en ce que certaines images du document vidéo reçu possèdent au moins une zone dégradée et au moins une zone non dégradée, le procédé comportant en outre les étapes suivantes :
- lors de la reproduction du document vidéo, acquisition d'au moins un contenu vocal à un moment défini par un marqueur temporel, ledit marqueur temporel définissant une plage du document vidéo dont les images contiennent des éléments visuels apparaissant dans au moins une zone non dégradée,
- transmission à un gestionnaire de documents audiovisuels de l'au moins un contenu vocal nouvellement acquis et du marqueur temporel associé,
- assemblage du document audiovisuel et d'au moins un contenu sonore nouvellement acquis de façon que le contenu vocal soit reproduit au moment défini par le marqueur temporel associé.

De cette façon, le document transmis pour ajouter de nouveaux contenus sonores n'a pas beaucoup de valeur cinématographique.

Selon un premier perfectionnement, un texte représentant les paroles du nouveau contenu vocal et une pluralité de marqueurs temporels associés au texte sont transmis à l'appareil de reproduction du document vidéo. Au moins une partie dudit texte est reproduite au moment indiqué de la reproduction du document vidéo à l'aide desdits marqueurs temporels. De cette façon, le doubleur peut lire sur l'écran le texte qu'il doit prononcer. Selon un perfectionnement du premier perfectionnement, des attributs associés au texte sont également transmis et afficher au moment indiqué de la reproduction du document vidéo à l'aide desdits marqueurs temporels. Ces attributs donnent des indications au doubleur sur la façon de lire le texte.

Selon un autre perfectionnement du premier perfectionnement, le texte est affiché dans au moins une fenêtre graphique de l'écran devant le doubleur dans une zone dégradée des images du document vidéo. De cette façon, toute la partie non dégradée du document est parfaitement lisible et utilisable pour le doublage. Selon un autre perfectionnement du dernier perfectionnement, les zones dégradées des images du document vidéo sont détectées au niveau de la reproduction du document. De cette façon, il n'y a pas besoin de transmettre les coordonnées des zones dégradées. Selon une variante, les positions des parties dégradées du document vidéo sont transmises et utilisées par l'appareil de reproduction pour positionner la fenêtre graphique affichant le texte dans ces zones dégradées. De cette façon, il n'y a pas besoin de déterminer ces zones et de consommer de la puissance de calcul pour analyser l'image à afficher à l'écran.

Selon un autre perfectionnement, un contenu audio constituant la bande son originale du document audiovisuel est transmise à l'appareil de reproduction, ce contenu audio étant reproduit également lors de la reproduction du contenu vidéo.

L'invention concerne aussi un dispositif de visualisation comportant un moyen de réception d'un document vidéo issu du document audiovisuel, un moyen d'acquisition et d'enregistrement de contenus vocaux ; caractérisé en ce que certaines images du document vidéo reçu possèdent au moins une zone dégradée et au moins une zone non dégradée, le dispositif d'acquisition faisant l'acquisition d'au moins un contenu vocal à un moment défini par un marqueur temporel, ledit marqueur temporel définissant une plage du document vidéo dont les images contiennent des éléments visuels affichés par un moyen d'affichage lors de la reproduction du document vidéo, les éléments visuels apparaissant dans au moins une zone non dégradée, un moyen de transmission d'au moins un contenu vocal nouvellement acquis et du marqueur temporel associé.

D'autres caractéristiques et avantages de l'invention apparaîtront à travers la description d'un exemple de réalisation non limitatif de l'invention, explicité à l'aide des figures jointes, parmi lesquelles :
- la figure 1 est un exemple de diagramme bloc d'un appareil de production de contenu audio et/ou visuel,
- la figure 2 représente un diagramme bloc d'une régie de doublage selon un exemple de réalisation de l'invention,
- la figure 3 représente un exemple de schéma des principaux circuits de la zone sécurisée selon un exemple d'implémentation de l'invention,
- la figure 4 représente un exemple d'apparence d'écran affichée au niveau de la régie de doublage lors de la création de nouvelles bandes son,
- la figure 5.a représente un exemple d'image de la bande vidéo originale non dégradée contenant un visage,

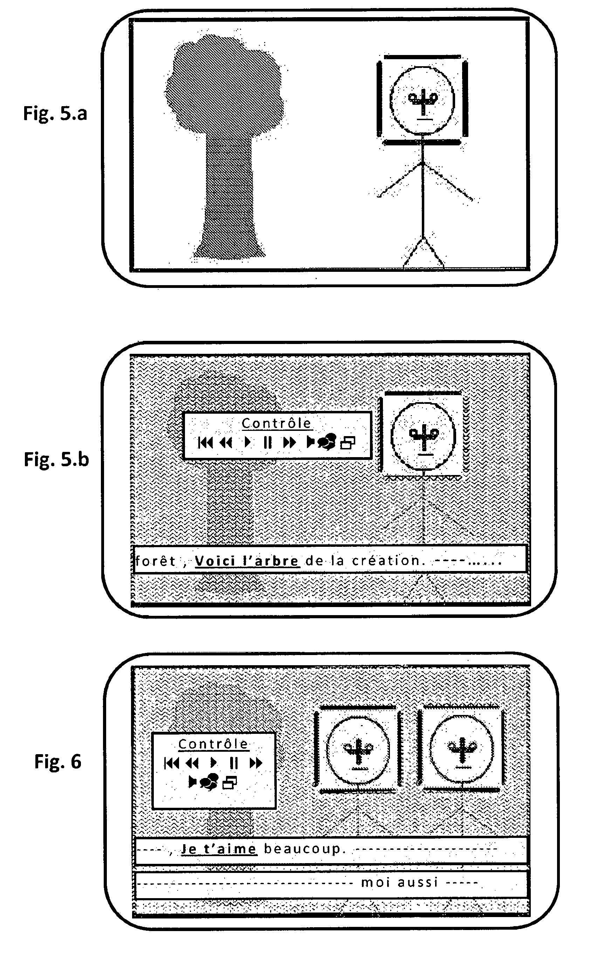

- la figure 5.b représente un exemple d'image de la bande vidéo dégradée,
- la figure 6 représente un exemple d'image de la bande vidéo originale dégradée contenant deux visages.

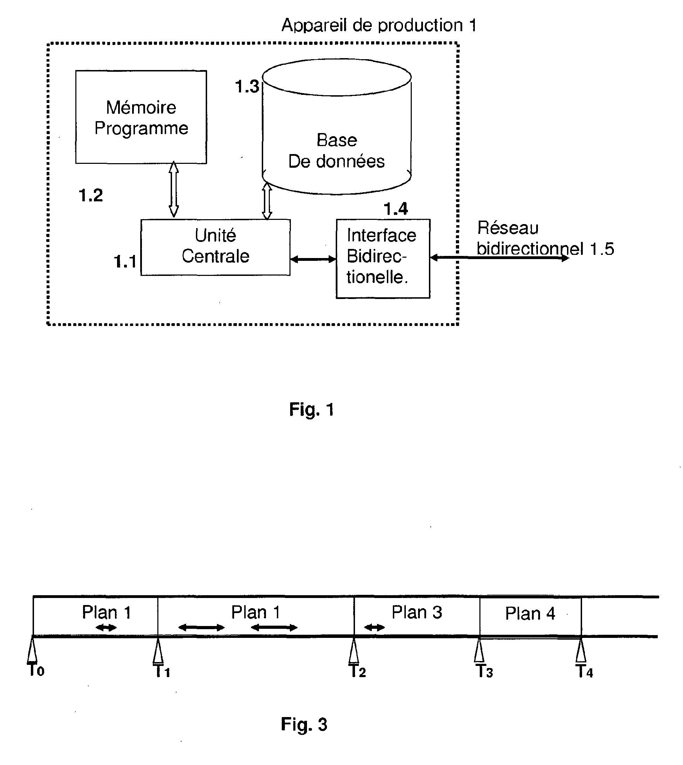

La figure 1 illustre un schéma de principe d'un appareil de production de documents audiovisuels selon un exemple préféré de réalisation de l'invention. L'appareil de production 1 comporte une unité centrale 1.1, une mémoire de programme 1.2 comprenant un programme d'exploitation, une base de données 1.3 contenant des contenus audio et/ou visuels et une interface de communication bidirectionnelles 1.4 permettant via un réseau 1.5 de télécharger et de transmettre des contenus audio et/ou visuels. Le réseau 1.5 peut être de type Internet.

La mémoire programme 1.2 contient un module de réalisation d'un document audiovisuel à partir de différents plans (ou « cut » en Anglais), un module d'analyse des documents stockés dans la base de données 1.3, ainsi qu'au moins un module de floutage (« blurring » en Anglais) destiné à dégrader l'image à certains endroits. Le module d'analyse s'appuie sur la présence éventuelle d'attributs permettant de déterminer plus facilement d'une part l'existence de certaines caractéristiques de l'image, typiquement la tête des acteurs, les visages ou les lèvres, et d'autre part, de la localisation dans l'image desdites caractéristiques. De façon générale, le module d'analyse détermine toutes les zones de l'image qui sont utiles au doublage, cela peut être par exemple un mouvement de mains, un feu, l'apparition soudaine d'un objet,....

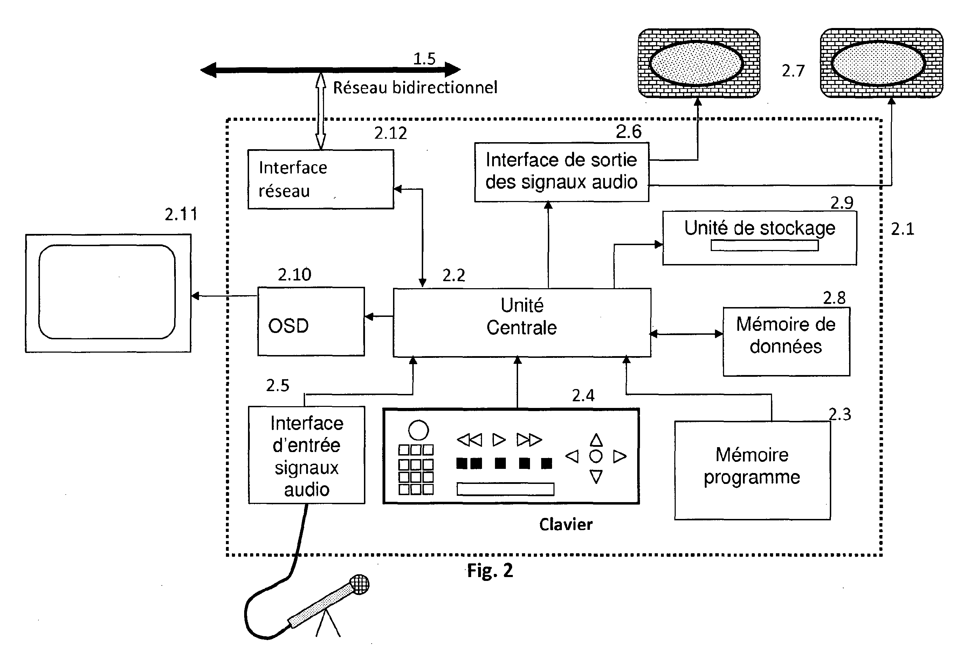

La figure 2 illustre un schéma de principe d'une régie de doublage 2.1. La régie de doublage dispose d'une Unité Centrale 2.2 (UC) reliée à une mémoire de programme 2.3, d'un clavier 2.4 permettant à l'utilisateur d'introduire toutes les commandes nécessaires lors de la reproduction de la bande vidéo et du doublage, une interface d'entrée audio 2.5 permettant l'acquisition des signaux venant d'un microphone et de les digitaliser, une interface de sortie des signaux audio 2.6 comprenant au moins un amplificateur envoyant les signaux sonores amplifiés à au moins deux haut-parleurs 2.7. Le clavier 2.4 dispose d'une touche de validation et d'un élément rotatif permettant de déplacer un index sur un écran, cet élément est par exemple une souris reliée au clavier. Le clavier dispose de touches permettant d'introduire les mêmes commandes que celles accessibles en sélectionnant des icônes de l'écran. Les haut-parleurs 2.7 sont connectés au lecteur, ils peuvent être des écouteurs sur un casque porté par l'utilisateur. Une mémoire de données 2.8 est reliée à l'unité centrale, cette mémoire qui est typiquement un disque dur, permet d'enregistrer des contenus audio et /ou visuels. De façon optionnelle, la régie de doublage 2.1 dispose d'une unité de stockage 2.9 des données audio et/ou visuelle éventuellement amovible capable de lire et d'écrire sur un support d'enregistrement tel que CD audio, DVD, cartouche magnétique, carte électronique, clef USB ....

La régie de doublage 2.1 comprend également un circuit 2.10 d'affichage de données à un écran déporté 2.11 Ce circuit 2.10, appelé souvent circuit OSD, de l'anglais "On Screen Display" (signifiant littéralement "affichage sur l'écran") est un générateur de texte et de graphisme qui permet d'afficher à l'écran des menus, des pictogrammes ou autres graphismes, et des menus facilitant le doublage. Le circuit OSD est contrôlé par l'Unité Centrale 2.2 et le programme contenu dans la mémoire 2.3. Le programme exécutable est avantageusement réalisé sous la forme d'un module de programme enregistré dans la mémoire morte 2.3. Il peut aussi être réalisé sous la forme d'un circuit spécialisé de type ASIC par exemple.

Le bus numérique 1.5 est connecté à un circuit d'interface réseau 2.12 qui transmet à la régie de doublage 2.1 des contenus audio soit sous forme numérique, soit sous forme analogique, le récepteur les enregistrant dans la mémoire 2.8. Le téléchargement de contenu audio et/ou vidéo est une technique bien connue qu'il est inutile d'expliquer dans la présente demande.

La production d'un document audiovisuel consiste à assembler des plans (ou « cut » en Anglais) en les mettant bouts à bouts. La figure 3 illustre un document audiovisuel comportant une pluralité de plans. Le document final est référencé par des marqueurs temporels, le document commence à la valeur de marqueur temporel 0. Chacun des plans est référencé par rapport au début du document, le premier plan commence à la valeur de marqueur temporel T0, le second plan commence à la valeur de marqueur temporel T1, le troisième à la valeur de marqueur temporel T2, ... De cette manière, lorsque l'on navigue de plans en plans, le programme de navigation utilise une table des marqueurs temporels pour pointer le nouveau plan. Pour chaque plan, une ou plusieurs plages temporelles contiennent des paroles à traduire dans une autre langue. Ces plages, représentées par des flèches horizontales sur la figure 3 sont également indexées par des marqueurs temporels. De cette façon, lors de la reproduction du document, il est possible de naviguer de plan en plan, et d'afficher sur un diagramme temporel la position des plages de paroles.

Chaque événement du document peut ainsi être référencé sur le plan temporel. Notamment, lorsque des paroles sont dites par un acteur, le début et la fin de chaque phrase est référencé au sein du document. Il est ainsi parfaitement possible de localiser les parties de la bande vidéo du document qui nécessite un doublage dans une autre langue. Chaque partie est associée à une référence temporelle de début et une référence temporelle de fin.

Après avoir décrit les différents éléments, nous allons maintenant expliquer comment ceux-ci coopèrent.

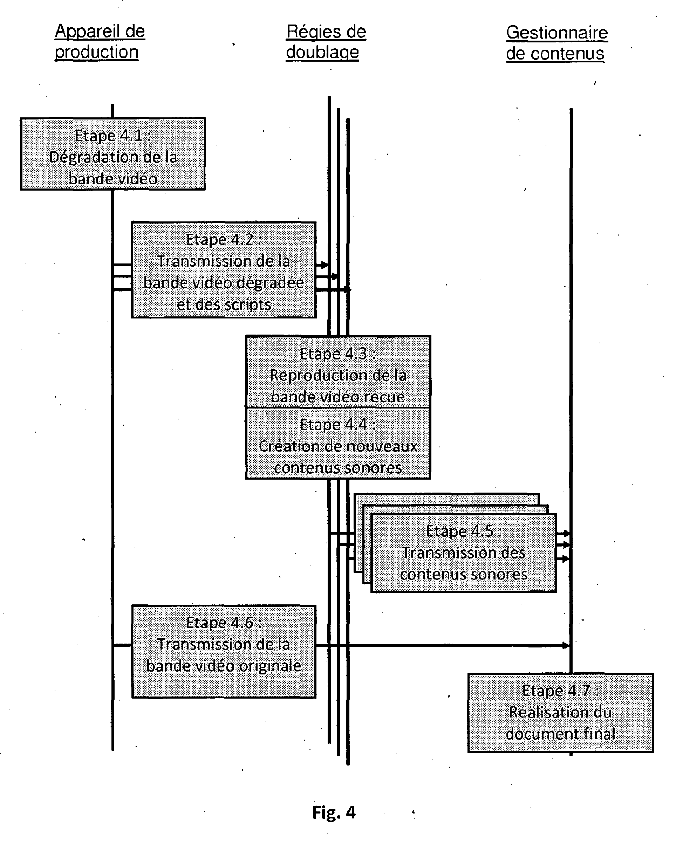

La figure 4 illustre le déroulement des différentes étapes entre le producteur du document audiovisuel, les différentes régies de doublage et le gestionnaire de contenus. Le gestionnaire de contenus peut être le producteur du document, le gestionnaire de contenus est chargé de fournir le document final avec les doublages.

Au départ, l'appareil de production dispose du document original composé de l'assemblage des diverses séquences et extrait la composante vidéo du document. A l'étape 4.1, la bande vidéo du document est analysée par un module de programme afin de déterminer les différentes zones où se trouvent des éléments utiles au doublage tels que le mouvement des lèvres. Puis, un second module dégrade dans chaque image la partie qui ne comporte pas ces caractéristiques. La dégradation consiste à altérer le contenu visuel en conservant cependant la vision des mouvements et la perception des couleurs. Par exemple, si la vidéo montre un drapeau flottant au vent, le spectateur peut reconnaitre que c'est un drapeau mais est incapable de déterminer lequel. De nombreuses techniques de dégradation de vidéo sont connues, tel que le floutage, la pixellisation ou même la superposition de hachures. Il est conseillé d'utiliser une technique non réversible, faisant par exemple appel à une donnée variant aléatoirement tout au long du traitement du document.

A la suite de quoi, l'appareil de production dispose d'un document vidéo ayant la même durée, les mêmes marqueurs temporels mais avec une image dégradée qui n'a peu de valeur sur le plan cinématographique. L'appareil de production transmet la bande vidéo dégradée avec les différents scripts correspondants au doublage à effectuer dans différentes langues (étape 4.2). De façon optionnelle, une bande son originale est également transmise. Selon un premier perfectionnement, cette bande son est celle des bruits de fond hors parole. De cette manière, le doubleur peut synchroniser sa voix avec certains bruits. Selon un second perfectionnement éventuellement combinable avec le premier, la bande son originale avec les paroles est également transmise. De cette manière le doubleur peut l'écouter pour reprendre les mêmes intonations de voix que celles de l'acteur présent dans la bande vidéo.

Un script est un texte où chaque mot ou groupe de mots est associé à un certain moment du document vidéo, à l'aide d'un marqueur temporel. Le script est transmis au format ASS, chaque caractère est codé en A.S.C.I.I.. La syntaxe du format ASS permet de spécifier des marqueurs temporels. Selon un perfectionnement, le script est transmis de façon chiffré, le code permettant le déchiffrement est donné au doubleur par un autre moyen de transport.

Chaque régie de doublage reçoit le document vidéo dégradé et le script correspondant à sa langue. A l'étape 4.3, le doubleur lance la reproduction de la bande vidéo dégradée, sur le menu de l'écran en face de lui, le script est affiché en indiquant par un marqueur au moment de lecture. Si le script est reçu chiffré, le doubleur doit introduire le code de déchiffrement avant de lancer la reproduction du document. En regardant les images du visage apparaissant sur l'écran de l'acteur qu'il double et en lisant le script qui s'affiche à un autre endroit, le doubleur prononce son texte dans le microphone de la régie de doublage. Le doubleur utilise le mouvement des lèvres de l'acteur pour mieux faire correspondre son texte (étape 4.4). Des commandes sont disponibles permettant au doubleur de se réentendre, de recommencer un enregistrement et de valider l'enregistrement qu'il vient d'effectuer. Un nouveau contenu vocal est ainsi créé, ce contenu vocal est synchronisé avec les mêmes marqueurs temporels que ceux du document vidéo dégradé.

A l'étape 4.5, les différentes régies de doublage transmettent au gestionnaire de contenus les nouveaux contenus vocaux avec les marqueurs temporels associés. Selon un mode préféré de réalisation, les contenus vocaux ainsi que les marqueurs temporels associés sont transmis de façon chiffrée au gestionnaire de contenus. Dans le même temps, l'appareil de production (s'il est différent du gestionnaire de contenus) transmet la bande vidéo originale (non dégradée) au gestionnaire de contenus (étape 4.6). A l'étape 4.7, le gestionnaire de contenus réalise le document final. Pour cela, le gestionnaire réalise autant de bandes audio qu'il y a de langues en mixant les contenus vocaux des doubleurs avec le bruit de fond. L'assemblage de différentes séquences sonores prononcées par les doubleurs s'effectue au moment spécifié par les marqueurs temporels. Au final, le document audiovisuel comporte une bande vidéo et d'autant de bandes son qu'il y a de langues.

Les figures 5.a et 5.b illustrent des apparences d'écran affichant des images du document à divers moment du traitement.

La figure 5.a représente un exemple d'image de la bande vidéo originale non dégradée contenant un visage telle qu'elle peut être affichée au niveau de l'appareil de production 1. Avant d'être transmise à la régie de doublage 2.1, cette image va être dégradée à l'exception des zones affichant des visages.

La figure 5.b représente un exemple de menu affiché par une régie de doublage 2.1. L'image affichée est celle représentée à la figure 5.a après dégradation. On voit que toute l'image est floutée à l'exception du visage de l'unique personnage.

Le script à lire par le doubleur apparaît sur un bandeau défilant en bas de l'image. Un curseur graphique se déplace sur le texte pour indiquer approximativement le mot ou la partie de mots que le doubleur doit lire au moment correspondant à l'image affichée. Le curseur graphique se déplace en utilisant les marqueurs temporels du script, il couvre approximativement deux secondes de paroles. Le curseur graphique peut être un changement de couleur du texte, un soulignement, la mise en caractère gras, ... Le doubleur doit observer le mouvement des lèvres de l'acteur sur l'image affichée afin que le mouvement des lèvres corresponde le mieux aux phrases lues. Il doit surtout faire en sorte de parler au moment où les lèvres de l'acteur bougent. C'est pourquoi il est important que les visages des acteurs ne soient pas dégradés et apparaissent à l'écran avec une bonne définition. Supposons par exemple que l'on est en train de doubler le film « Quai des brumes », et que l'acteur Jean Gabin prononce en français « t'as d'beaux yeux, tu sais ». Cette phrase écrite dans une autre langue peut inverser les mots, comme « Tu sais que tu as de beaux yeux». Le doubleur doit donc prononcer sa phrase dans le temps délimité par le mouvement des lèvres, et non faire correspondre exactement au même moment les mots de la langue d'origine des mots de la langue de doublage.

Avantageusement, un menu de contrôle est affiché sur l'écran permettant au doubleur de rappeler les commandes disponibles. Ces commandes sont :
- Lecture ( 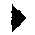 )
- Lecture avec le son original ( 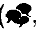 , si disponible)
- Lecture avec le bruit de fond ( 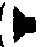 , si disponible)
- Retour au début du plan ( 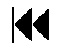 )
- Saut au plan suivant ( 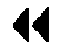 )
- Saut au plan précédent ( 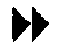 )
- Enregistrement de la séquence prononcée ( 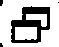 )

Ces commandes sont accessibles en sélectionnant l'icône sur l'écran à l'aide d'un curseur et en appuyant sur un bouton, elles sont également accessibles par des touches du clavier 2.4.

Selon un perfectionnement, le contenu vidéo dégradé est transmis à la régie de doublage avec des attributs de lecture destinés au doubleur. Typiquement, ces attributs donnent des indications au doubleur sur la façon de lire le texte, par exemple : rapide, lent, monotone, en criant, avec des sanglots, aigu, grave, en bégayant, .... Les attributs de lecture sont associés à des marqueurs temporels de façon à apparaître au moment où le texte concerné par ces attributs est affiché. Ces attributs apparaissent dans une fenêtre spécifique du menu.

Selon un perfectionnement, les différentes fenêtres (script, menu de contrôle, attributs de lecture, barre temporelle, ...) sont affichées dans une partie dégradée de l'image de façon à ne pas gêner la lisibilité des visages. Le curseur se déplaçant avec la souris disparaît lorsque sa position se trouve dans une zone de visage. La détection des zones dégradées de l'image s'effectue au niveau de la régie de doublage en analysant l'image avec la connaissance du type de dégradation. La nature de la dégradation (floutage, rayures, hachures, manque de contraste, ...) est transmise comme information de service avec la vidéo dégradée.

Selon une variante, l'appareil de producteur envoie avec la vidéo dégradée les coordonnées spatiales des zones contenant les visages ou les lèvres des acteurs, ou des zones contenant les visages ou les lèvres des acteurs. La régie de doublage place les fenêtres de menu de façon à ne recouvrir aucune des zones dégradées de l'image. Ainsi, l'appareil de reproduction n'a pas besoin de déterminer les zones dégradées et non dégradées pour positionner les différentes fenêtres.

La figure 6 représente un autre exemple de menu affiché par une régie de doublage 2.1. L'image affichée comporte deux acteurs dont les paroles sont doublées par deux doubleurs. Chaque doubleur voit une image floutée à l'exception des deux visages des personnages. Si les doubleurs travaillent ensemble, le doublage s'effectue en affichant les deux scripts sur le même écran. Dans ce cas, deux bandeaux de script sont affichés. Le curseur graphique indiquant le moment de lecture peut se situer sur l'un ou l'autre des bandeaux, ou sur les deux si les doubleurs doivent parler en même temps.

Les présents modes de réalisation doivent être considérés à titre d'illustration mais peuvent être modifiés dans le domaine défini par la portée des revendications jointes. En particulier, l'invention ne se limite pas aux décodeurs décrits précédemment mais à tout appareil doté de circuits ayant des contraintes de sécurité.

## Revendications

1. Procédé pour rajouter un nouveau contenu vocal à un document audiovisuel, comportant une étape de réception (4.2) d'un document vidéo composé d'images dans un dispositif de reproduction (2.1) ; **caractérisé en ce que** certaines images du document vidéo reçu possèdent au moins une zone dégradée au moyen d'un module de floutage et au moins une zone non dégradée, le procédé comportant en outre les étapes suivantes
- lors de la reproduction (4.3) du document vidéo, acquisition (4.4) d'au moins un contenu vocal à un moment défini par un marqueur temporel, ledit marqueur temporel définissant le début d'une plage du document vidéo nécessitant l'ajout d'un contenu vocal et dont les images contiennent au moins une zone non dégradée,
- transmission (4.5) à un gestionnaire de documents audiovisuels de l'au moins un contenu vocal nouvellement acquis et du marqueur temporel associé,
- assemblage (4.7) du document audiovisuel et d'au moins un contenu sonore nouvellement acquis de façon que le contenu vocal soit reproduit au moment défini par le marqueur temporel associé.

2. Procédé pour rajouter un nouveau contenu vocal selon la revendication 1 ; **caractérisé en ce qu'**il comporte une étape de transmission d'un texte représentant les paroles du nouveau contenu vocal et d'une pluralité de marqueurs temporels associés au texte, et une étape d'affichage par l'appareil de reproduction (2.1) d'au moins une partie dudit texte au moment indiqué par lesdits marqueurs temporels lors de la reproduction (4.3) du document vidéo.

3. Procédé pour rajouter un nouveau contenu vocal selon la revendication 2 ; **caractérisé en ce qu'**il comporte une étape de transmission d'une liste d'attributs associés au texte transmis, lesdits attributs contenant des indications sur la façon de lire ledit texte transmis et d'une pluralité de marqueurs temporels associés aux attributs, et une étape d'affichage par l'appareil de reproduction (2.1) desdits attributs au moment indiqué par lesdits marqueurs temporels lors de la reproduction (4.3) du contenu vidéo.

4. Procédé pour rajouter un nouveau contenu vocal selon la revendication 2; **caractérisé en ce que** le texte est affiché dans au moins une fenêtre graphique placée par le dispositif de reproduction (2.1) dans une zone dégradée des images du document vidéo.

5. Procédé pour rajouter un nouveau contenu vocal selon la revendication 4 ; **caractérisé en ce que** le dispositif de reproduction (2.1) dispose d'un moyen de détection des zones dégradées des images du document vidéo afin d'y positionner la fenêtre graphique affichant le texte.

6. Procédé pour rajouter un nouveau contenu vocal selon la revendication 4 ; **caractérisé en ce qu'**il comporte une étape de réception par le dispositif de reproduction (2.1) de la position des zones dégradées du document vidéo afin d'y positionner la fenêtre graphique affichant le texte.

7. Procédé pour rajouter un nouveau contenu vocal selon l'une quelconque des revendications 1 à 6 ; **caractérisé en ce qu'**il comporte une étape de transmission d'un contenu audio constituant la bande son originale du document audiovisuel et une étape de reproduction dudit contenu audio lors de la reproduction (4.3) du contenu vidéo.

8. Dispositif de visualisation (2.1) comportant un moyen de réception (2.12) d'un document vidéo issu du document audiovisuel, un moyen d'acquisition et d'enregistrement (2.5, 2.8) de contenus vocaux ; **caractérisé en ce que** certaines images du document vidéo reçu possèdent au moins une zone dégradée au moyen d'un module de floutage et au moins une zone non dégradée, le dispositif d'acquisition (2.5) faisant l'acquisition d'au moins un contenu vocal à un moment défini par un marqueur temporel, ledit marqueur temporel définissant le début d'une plage du document vidéo nécessitant l'ajout d'un contenu vocal et dont les images contiennent des éléments visuels affichés par un moyen d'affichage (2.11) lors de la reproduction (4.3) du document vidéo, les éléments visuels apparaissant dans au moins une zone non dégradée, un moyen de transmission (2.12, 2.9) d'au moins un contenu vocal nouvellement acquis et du marqueur temporel associé, ledit dispositif de visualisation comportant en outre des moyens permettant l'assemblage de l'au moins un contenu vocal nouvellement acquis avec le document vidéo.

9. Dispositif de visualisation (2.1) selon la revendication 8 ; **caractérisé en ce que** le moyen de réception (2.12) reçoit un texte contenant les paroles du nouveau contenu vocal et une pluralité de marqueurs temporels associés audit texte, le moyen d'affichage (2.11) affichant au moins une partie dudit texte lors de la reproduction du document vidéo à un moment indiqué par lesdits marqueurs temporels reçus.

10. Dispositif de visualisation (2.1) selon la revendication 9 ; **caractérisé en ce que** le moyen de réception (2.12) reçoit une liste d'attributs associés au texte reçu, lesdits attributs contenant des indications sur la façon de lire ledit texte transmis et une pluralité de marqueurs temporels associés audit texte, le moyen d'affichage (2.11) affichant au moins un attribut reçu lors de la reproduction du document vidéo à un moment indiqué par lesdits marqueurs temporels reçus.

11. Dispositif de visualisation (2.1) selon la revendication 9; **caractérisé en ce que** le moyen d'affichage (2.11) affiche le texte dans au moins une fenêtre graphique placée dans une zone dégradée des images du document vidéo.

12. Dispositif de visualisation (2.1) selon la revendication 11 ; **caractérisé en ce qu'**il comporte en outre d'un moyen de détection des zones dégradées des images du document vidéo afin d'y positionner la fenêtre graphique affichant le texte.

13. Dispositif de visualisation (2.1) selon la revendication 11 ; **caractérisé en ce que** le moyen de réception (2.12) reçoit la position des zones dégradées du document vidéo afin d'y positionner la fenêtre graphique affichant le texte.

14. Dispositif de visualisation (2.1) selon l'une quelconque des revendications 8 à 13 ; **caractérisé en ce que** le moyen de réception (2.12) reçoit un contenu audio constituant la bande son originale du document audiovisuel, le dispositif de visualisation (2.1) comprenant aussi un moyen de reproduction dudit contenu audio lors de la reproduction (4.3) du document vidéo.

## Patentansprüche

1. Verfahren zum Hinzufügen eines neuen Sprachinhaltes zu einem audiovisuellen Dokument, umfassend einen Empfangsschritt (4.2) eines aus Bildern zusammengesetzten Videodokumentes in einer Wiedergabevorrichtung (2.1), **dadurch gekennzeichnet, dass** bestimmte Bilder des empfangenen Videodokumentes mindestens einen mittels eines Verpixelungsmoduls unscharf gestalteten Bereich und mindestens einen nicht-unscharf gestalteten Bereich aufweisen, wobei das Verfahren darüber hinaus die nachfolgenden Schritte umfasst:
- während der Wiedergabe (4.3) des Videodokumentes, Akquisition (4.4) von mindestens einem Sprachinhalt zu einem durch einen Zeitstempel vorbestimmten Zeitpunkt, wobei der Zeitstempel den Anfang eines Gebietes des Videodokumentes definiert, zu dem die Hinzufügung eines Sprachinhaltes notwendig ist und dessen Bilder mindestens einen nicht-unscharf gestalteten Bereich enthalten,
- Übertragung (4.5) des mindestens einen, neu akquirierten Sprachinhaltes und des zugehörigen Zeitstempels an einen Manager von audiovisuellen Dokumenten,
- Verknüpfung (4.7) des audiovisuellen Dokumentes mit mindestens einem neu akquirierten akustischen Inhalt dergestalt, dass der Sprachinhalt zu dem durch den zugehörigen Zeitstempel definierten Zeitpunkt wiedergegeben wird.

2. Verfahren zum Hinzufügen eines neuen Sprachinhaltes nach Anspruch 1, **dadurch gekennzeichnet, dass** es einen Übertragungsschritt eines Textes umfasst, der die Worte des neuen Sprachinhaltes darstellt, und einer Vielzahl von Zeitstempeln, die zu dem Text gehören, und einen Anzeigeschritt durch das Wiedergabegerät (2.1) von mindestens einem Teil des Textes zu dem durch die Zeitstempel angegebenen Zeitpunkt während der Wiedergabe (4.3) des Videodokumentes.

3. Verfahren zum Hinzufügen eines neuen Sprachinhaltes nach Anspruch 2, **dadurch gekennzeichnet, dass** es einen Übertragungsschritt einer Liste von Attributen umfasst, die zu dem übertragenen Text gehören, wobei die Attribute Angaben über die Art und Weise enthalten, wie der übertragene Text gelesen werden soll, und einer Vielzahl von Zeitstempeln, die zu den Attributen gehören, und einen Anzeigeschritt durch das Wiedergabegerät (2.1) der Attribute zu dem durch die Zeitstempel angegebenen Zeitpunkt während der Wiedergabe (4.3) des Videoinhaltes.

4. Verfahren zum Hinzufügen eines neuen Sprachinhaltes nach Anspruch 2, **dadurch gekennzeichnet, dass** der Text in mindestens einem grafischen Fenster angezeigt wird, das durch die Wiedergabevorrichtung (2.1) in einem unscharf gestalteten Bereich der Bilder des Videodokumentes platziert wird.

5. Verfahren zum Hinzufügen eines neuen Sprachinhaltes nach Anspruch 4, **dadurch gekennzeichnet, dass** die Wiedergabevorrichtung (2.1) über ein Erfassungsmittel der unscharf gestalteten Bereiche der Bilder des Videodokumentes verfügt, um dort das grafische Fenster zu positionieren, das den Text anzeigt.

6. Verfahren zum Hinzufügen eines neuen Sprachinhaltes nach Anspruch 4, **dadurch gekennzeichnet, dass** es einen Empfangsschritt durch die Wiedergabevorrichtung (2.1) der Position der unscharf gestalteten Bereiche des Videodokumentes umfasst, um dort das grafische Fenster zu positionieren, das den Text anzeigt.

7. Verfahren zum Hinzufügen eines neuen Sprachinhaltes nach irgendeinem der Ansprüche 1 bis 6, **dadurch gekennzeichnet, dass** es einen Übertragungsschritt eines Audioinhaltes umfasst, der die originale Tonspur des audiovisuellen Dokumentes ausmacht, und einen Wiedergabeschritt des Audioinhaltes während der Wiedergabe (4.3) des Videoinhaltes.

8. Visualisierungsvorrichtung (2.1), umfassend ein Empfangsmittel (2.12) eines Videodokumentes, das aus dem audiovisuellen Dokument hervorgegangen ist, ein Akquisitions- und Aufzeichnungsmittel (2.5, 2.8) von Sprachinhalten, **dadurch gekennzeichnet, dass** bestimmte Bilder des empfangenen Videodokumentes mindestens einen mittels eines Verpixelungsmoduls unscharf gestalteten Bereich und mindestens einen nicht-unscharf gestalteten Bereich aufweisen, wobei die Akquisitionsvorrichtung (2.5) zu einem durch einen Zeitstempel definierten Zeitpunkt die Akquisition von mindestens einem Sprachinhalt durchführt, wobei der Zeitstempel den Anfang eines Gebietes des Videodokumentes definiert, zu dem die Hinzufügung eines Sprachinhaltes notwendig ist, und dessen Bilder visuelle Elemente enthalten, die durch ein Anzeigemittel (2.11) während der Wiedergabe (4.3) des Videodokumentes angezeigt werden, wobei die visuellen Elemente in mindestens einem nicht-unscharf gestalteten Bereich erscheinen, ein Übertragungsmittel (2.12, 2.9) des mindestens einen neu akquirierten Sprachinhaltes und des zugehörigen Zeitstempels, wobei die Visualisierungsvorrichtung darüber hinaus Mittel umfasst, welche die Verknüpfung des mindestens einen neu akquirierten Sprachinhaltes mit dem Videodokument ermöglichen.

9. Visualisierungsvorrichtung (2.1) nach Anspruch 8, **dadurch gekennzeichnet, dass** das Empfangsmittel (2.12) einen Text empfängt, der die Worte des neuen Sprachinhaltes und eine Vielzahl von Zeitstempeln enthält, die zu dem Text gehören, wobei das Anzeigemittel (2.11) mindestens einen Teil des Textes während der Wiedergabe des Videodokumentes zu einem Zeitpunkt anzeigt, der durch die empfangenen Zeitstempel angegeben wird.

10. Visualisierungsvorrichtung (2.1) nach Anspruch 9, **dadurch gekennzeichnet, dass** das Empfangsmittel (2.12) eine Liste von Attributen empfängt, die zu dem empfangenen Text gehören, wobei die Attribute Angaben über die Art und Weise enthalten, wie der übertragene Text gelesen werden soll, und eine Vielzahl von Zeitstempeln, die zu dem Text gehören, wobei das Anzeigemittel (2.11) mindestens ein während der Wiedergabe des Videodokumentes empfangenes Attribut zu einem Zeitpunkt anzeigt, der durch die empfangenen Zeitstempel angegeben wird.

11. Visualisierungsvorrichtung (2.1) nach Anspruch 9, **dadurch gekennzeichnet, dass** das Anzeigemittel (2.11) den Text in mindestens einem grafischen Fenster anzeigt, das in einem unscharf gestalteten Bereich der Bilder des Videodokumentes platziert wird.

12. Visualisierungsvorrichtung (2.1) nach Anspruch 11, **dadurch gekennzeichnet, dass** es darüber hinaus ein Erfassungsmittel von unscharf gestalteten Bereichen der Bilder des Videodokumentes umfasst, um dort das grafische Fenster zu positionieren, das den Text anzeigt.

13. Visualisierungsvorrichtung (2.1) nach Anspruch 11, **dadurch gekennzeichnet, dass** das Empfangsmittel (2.12) die Position der unscharf gestalteten Bereiche des Videodokumentes empfängt, um dort das grafische Fenster zu positionieren, das den Text anzeigt.

14. Visualisierungsvorrichtung (2.1) nach irgendeinem der Ansprüche 8 bis 13, **dadurch gekennzeichnet, dass** das Empfangsmittel(2.12) einen Audioinhalt empfängt, der die originale Tonspur des audiovisuellen Dokumentes ausmacht, wobei die Visualisierungsvorrichtung (2.1) auch ein Wiedergabemittel des Audioinhaltes während der Wiedergabe (4.3) des Videodokumentes umfasst.

## Claims

1. A method for adding a new voice content to an audiovisual document, comprising a step (4.2) of receiving a video document composed of images in a reproduction device (2.1); **characterized in that** certain images of the video document received comprise at least one degraded area and at least one non-degraded area, the method furthermore comprising the following steps:
- during the reproduction (4.3) of the video document, acquisition (4.4) of at least one voice content at a moment defined by a time marker, said time marker defining the beginning of a zone of the video document requiring the add of a voice content and whose images contain at least one non-degraded area,
- transmission (4.5) to a manager of audiovisual documents of the at least one newly acquired voice content and of the associated time marker,
- assembly (4.7) of the audiovisual document and of at least one newly acquired sound content in such a way that the voice content is reproduced at the moment defined by the associated time marker.

2. The method for adding a new voice content as claimed in claim 1; **characterized in that** it comprises a step of transmitting a text representing the speech of the new voice content and of a plurality of time markers associated with the text, and a step of display by the reproduction device (2.1) of at least one part of said text at the moment indicated by said time markers during the reproduction (4.3) of the video document.

3. The method for adding a new voice content as claimed in claim 2; **characterized in that** it comprises a step of transmitting a list of attributes associated with the text transmitted, said attributes comprising indications on the way to read said text and a plurality of time markers associated with the attributes, and a step of displaying by the reproduction device (2.1) of said attributes at the moment indicated by said time markers during the reproduction (4.3) of the video content.

4. The method for adding a new voice content as claimed in claim 2; **characterized in that** the text is displayed in at least one graphical window placed by the reproduction device (2.1) in a degraded area of the images of the video document.

5. The method for adding a new voice content as claimed in claim 4; **characterized in that** the reproduction device (2.1) employs a means for detecting the degraded areas of the images of the video document so as to position therein the graphical window displaying the text.

6. The method for adding a new voice content as claimed in claim 4; **characterized in that** it comprises a step of reception by the reproduction device (2.1) of the position of the degraded areas of the video document so as to position therein the graphical window displaying the text.

7. The method for adding a new voice content as claimed in any one of claims 1 to 6; **characterized in that** it comprises a step of transmitting an audio content constituting the original sound track of the audiovisual document and a step of reproducing said audio content during the reproduction (4.3) of the video content.

8. A viewing device (2.1) comprising a means for receiving (2. 12) a video document arising from the audiovisual document, a means of acquisition and recording (2.5, 2.8) of voice contents; **characterized in that** certain images of the video document received comprise at least one degraded area and at least one non-degraded area, the acquisition device (2.5) effecting the acquisition of at least one voice content at a moment defined by a time marker, said time marker defining the beginning of a zone of the video document requiring the add of a voice content and whose images contain visual elements displayed by a display means (2.11) during the reproduction (4.3) of the video document, the visual elements appearing in at least one non-degraded area, a means for transmitting (2.12, 2.9) at least one newly acquired voice content and the associated time marker, said display device comprising in addition means enabling assembly of at least one newly acquired voice content with the video document.

9. The viewing device (2.1) as claimed in claim 8; **characterized in that** the reception means (2.12) receives a text containing the speech of the new voice content and a plurality of time markers associated with said text, the display means (2.11) displaying at least one part of said text during the reproduction of the video document at a moment indicated by said time markers received.

10. The viewing device (2.1) as claimed in claim 9; **characterized in that** the reception means (2.12) receives a list of attributes associated with the text received, said attributes comprising indications on the way to read said text and a plurality of time markers associated with said text, the display means (2.11) displaying at least one attribute received during the reproduction of the video document at a moment indicated by said time markers received.

11. The viewing device (2.1) as claimed in claim 9; **characterized in that** the display means (2.11) displays the text in at least one graphical window placed in a degraded area of the images of the video document.

12. The viewing device (2.1) as claimed in claim 11; **characterized in that** it furthermore comprises a means for detecting the degraded areas of the images of the video document so as to position therein the graphical window displaying the text.

13. The viewing device (2.1) as claimed in claim 11; **characterized in that** the reception means (2.12) receives the position of the degraded areas of the video document so as to position therein the graphical window displaying the text.

14. The viewing device (2.1) as claimed in any one of claims 8 to 13; **characterized in that** the reception means (2.12) receives an audio content constituting the original sound track of the audiovisual document, the viewing device (2.1) also comprising a means for reproducing said audio content during the reproduction (4.3) of the video document.
